# EUROPEAN PATENT SPECIFICATION

(11) **EP 1 555 897 B1**
(45) Date of publication and mention of the grant of the patent: **11.04.2007**
(21) Application number: 03775804.2
(22) Date of filing: 30.10.2003
(51) Int. Cl.: A23L 2/52, A23L 2/38, A23L 1/30, A23L 1/302, A61K 31/70

(54) **ERGOGENIC MULTIVITAMIN-MINERAL ENERGY SUPPLEMENT FOR THE PREVENTION OF MUSCLE FATIGUE**
LEISTUNGSSTEIGERNDE MULTIVITAMIN/MINERALE ERGÄNZUNG ZUR VORBEUGUNG VON MUSKULÄRER ERSCHÖPFUNG
SUPPLEMENT ENERGISANT ERGOGENIQUE MINERAUX / MULTIVITAMINES DESTINE A LA PREVENTION DE LA FATIGUE MUSCULAIRE

(30) Priority: 30.10.2002 IT RM20020545
(43) Date of publication of application: 27.07.2005
(73) Proprietor: CHEMENTECNO S.r.l., 20052 Monza, (MI) (IT)
(72) Inventor: CIANFARANI, Giuseppe, c/o Chementecno S.r.l., 20052 Monza (IT)
(74) Representative: Banchetti, Marina
(86) International application number: PCT/IT2003/000702
(87) International publication number: WO 2004/039179

(56) References cited:
- WO-A-00/70972
- WO-A-01/05253
- WO-A-01/95915
- FR-M- 6 065
- US-A- 3 931 402

## Description

The present invention concerns an ergogenic multivitamin-mineral energy supplement for the prevention of muscle fatigue. More specifically, the invention concerns an energizing and rehydrating composition for oral administration, to be used to enhance physical performance and increase resistance to fatigue, both in humans and in animals, helping the body to quickly replace energy loss after intense physical activity and to replace electrolytes lost through sweating.

As is known, many diet foods, particularly drinks, are currently offered and sold to help athletes, and sportspeople in general, to bear the intense physical strain they undergo while training and in competitive events. In the specific field of sport beverages, a first category of known products is that of drinks that only provide water and sugars (for example, sucrose, glucose, dextrose, fructose, maltose, maltodextrin), which refuel the body after the energy lost (or to be consumed) during sporting activities.

A second category of products is the one in which sugars are supplemented with the electrolytes corresponding to the body salts that are normally lost in physical exercise, such as sodium, potassium, chlorides and inorganic phosphates. The well-known drink Gatorade, whose composition is the object of the British patent no. 1.252.781 (Stokely-Van Camp, Inc.), is part of this category. This patent, first published in 1971, describes a preparation which, appropriately diluted, provides an isotonic solution that simulates the composition and concentration of body fluids lost through sweat (the ions Na⁺, K⁺, Cl⁻ and PO₄^{≡}), in addition to 30-60 g/l of glucose.

According to a specific embodiment, the aforesaid drink contains 0.85 g of NaCl, 0.15 g of NaH₂PO₄, 0.15 g of KH₂PO₄, 0.10 g of KCl, 0.15 g of NaHCO₃ and 5 g of glucose per liter, besides, possibly, sucrose, fructose, artificial sweeteners and flavorings. As is known, Gatorade is offered as a thirst-quenching and rehydrating drink during sporting activities, in order to refuel the body with the lost electrolytes and to provide fast usable energy.

A third category of sports drinks is the one in which all the aforesaid ingredients are supplemented with vitamins, particularly vitamin C (ascorbic acid) and vitamin E (α-tocopherol) that act as antioxidants, and also the vitamins of group B (among which B₁, thiamine, and B₆, pyridoxine) as adjuvants in the energy metabolism.

As well as the foregoing fundamental ingredients, many of the known sports drinks contain many other ingredients that are, from time to time, claimed to help prevent muscle fatigue, optimize energy metabolism, provide alternative sources of energy or to restore the reserves of amino acids lost with physical effort.

The International patent application published as WO-A-0195915 discloses a dietary supplement intended for providing energy to the body, which is based on the synergistic combination of an alkanoyl-carnitine and ribose, or a phosphorylated derivative thereof.

Further, US-A-3931402 discloses preparations to be administered either parenterally or by the oral route in order to supply the organism with energy, which preparations comprise, as the main ingredients:
1. at least one glucide, such as glucose, fructose, lactose and galactose, and
2. at least one phosphorylated glucide in the form of a pharmaceutically acceptable salt thereof, examples of which include alkali metal salts and alkaline earth metal salts of fructose-1,6-diphosphate.

A more careful study of the basic requirements in order for a sports drink to effectively help overcome fatigue and thus improve athletic performance, however, leads to identifying some key elements that a good ergogenic supplement must have in order to optimally carry out its own functions.

Firstly, the energy supplement must efficiently help to maintain muscle pH as stable as possible, by acting as a buffer whenever possible. It is well known that, with physical exercise, the increased use of glycogen in the muscle creates an accumulation of lactic acid and pyruvic acid, and that when muscle pH falls below 6.5 due to this accumulation, the enzymatic reactions regulating muscle activity are blocked.

Secondly, the energy supplement must be able to reduce the accumulation of ammonia, which derives from using the amino acids for energy purposes, and is thus an indication of muscle damage. Besides being toxic for all cells, ammonia reduces the formation of glycogen or blocks the energy cycle, and it is known that the higher the level of ammonia in the blood, the lower the sports performance.

A third requirement of fundamental importance for a good energy supplement is the ability to prevent the loss of phosphates, since their depletion in the body damages athletic performance. In fact, in both anaerobic and resistance exercises a considerable amount of phosphate is lost by the muscle and is released into the blood, and the amount of phosphates provided by normal diets may be insufficient to satisfy the need during intense physical exercise.

The ergogenic function of phosphates is threefold, since they firstly buffer muscular acidity, secondly they increase the level of 2,3-diphosphoglycerate (2,3-DPG), the enzyme that induces oxygen in the muscles and, thirdly, by being involved in the formation of various enzymes that contribute to producing muscle glycogen, favoring the latter's synthesis and use as fuel.

By taking the aforesaid into due consideration, the present invention aims to provide an energizing and rehydrating composition for oral administration that contains one or more sources of sugars as fundamental elements, and that also meets the foregoing requirements for optimal use as an energy supplement for sports activities.

To this end, as a basis for the formulation, the present invention proposes the use of a combination of three compounds which by themselves will provide at least two different sugar sources (ribose and other carbohydrates, particularly fructose), a source of organic phosphate, and sources of organic magnesium and organic calcium.

As well as the sugars and phosphates dealt with above, the proposed energy supplement also contains calcium and magnesium, both being important for the effectiveness of the product: magnesium comes into play in the metabolism of fats and of carbohydrates, and its contribution is very useful also to prevent muscle cramps, while calcium is fundamental for muscle contraction and, besides, it must be administered to the body in a proper ratio with phosphorous, i.e. 1:1.

An extremely important innovative aspect of the proposed formulation according to the present invention is the fact that phosphorous, calcium and magnesium are provided in the form of organic compounds: instead of providing calcium and magnesium mineral salts, or inorganic phosphates, the formulation of the present invention contains these elements incorporated in organic compounds, and this makes for much easier assimilation and increases their bioavailability.

Another primary characteristic of the combination of the three fundamental ingredients of the preparation according to the present invention is the fact that it entails providing the body with ribose (a pentose monosaccharide that is used in the body for producing glucose and for the synthesis of nucleotides) associated with a source of organic phosphorous. In fact, ribose and phosphate are both involved in the formation of molecules of ATP (adenosine triphosphate, where the monosaccharide making up the adenosine is ribose), and it is known that the essential function of ATP is to temporarily store the energy produced during cell metabolism and to make it readily usable when needed. A contribution of the necessary elements for a fast, endogenous synthesis of ATP makes it possible to easily recover the energy lost through physical effort.

Therefore, the present invention specifically provides a multivitamin-mineral energy supplement comprising, as fundamental ingredients, one or more magnesium salts of a phosphorylated carbohydrate, one or more calcium salts of a phosphorylated carbohydrate and ribose.

In addition to phosphates, calcium and magnesium made organic, and to ribose provided together with a source of organic phosphorous, the fundamental ingredients in the formulation also contain other carbohydrates, directly usable for the production of energy, that in the preferred embodiments are composed of a simple sugar, fructose. With respect to other sugars usable as energy sources, fructose (a ketohexose monosaccharide, which in the hemiacetal form has a cyclic structure of five carbon atoms) has the advantage of not stimulating the production of insulin and not requiring its presence for one's metabolism, thus favouring the maintenance of "glycemic calm".

Therefore, said magnesium salts of a phosphorylated carbohydrate are preferably fructose-1,6-diphosphate magnesium salts, and said calcium salts of a phosphorylated carbohydrate are fructose-1,6-diphosphate calcium salts. More specifically, these ingredients are respectively the monomagnesium salt and bicalcium salt of fructose-1,6-diphosphate.

Fructose-1,6-diphosphate (FdP), also known as phosfructose, 1,6-D-fructosediphosphoric acid, D-fructose-1,6-bis(dihydrogen phosphate), is a hexose diphosphate available in nature, having the following structural formula:

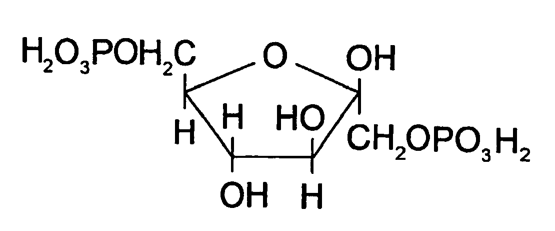

In its endogenous form, fructose-1,6-diphosphate is an intermediate of glycolysis which, within the cell, modulates different enzymatic reactions by activating phosphofructokinase, pyruvate kinase and lactic dehydrogenase. Many studies have in the past shown that parenteral administration of exogenous fructose-1,6-diphosphate has a pharmacological action at the cell membrane level, exerting a glycometabolic and polarizing effect. In accordance with these studies, the sodium salt of FdP, a pharmaceutically active principle called Esafosfina^{®} (Biomedica Foscama), is administered parenterally in the treatment of both acute hypophosphatemia, due, for example, to blood transfusions or surgery involving blood circulation outside the body, or during parenteral nutrition, and also connected to chronic situations that are sometimes associated with phosphate depletion, such as chronic alcoholism, chronic respiratory insufficiency, ischemic cardiomyopathy.

The aforesaid studies had also evidenced that FdP could not be administered orally since most of the drug was metabolised at the level of the gastrointestinal tract and split into its constituents, i.e. fructose and phosphate. Only in more recent times have products for oral administration been described and marketed (namely, tablets and capsules), having one or more salts of FdP among the active ingredients: among these, the product known by the commercial name of Esaglut^{®} (Biomedica Foscama), sold since 1989 as an over-the-counter (OTC) product, composed of a combination of L-glutamine, fructose-1,6-diphosphate bicalcium salt, monohydrate thiamine (Vit. B₁), pyridoxine hydrochloride (Vit. B₆) and calcium pantothenate. The (oral) administration of this preparation is prescribed for combating states of neuropsychic exhaustion, intellectual fatigue and asthenia, and is also proposed as an adjuvant during convalescence.

A very similar product to the one above is described in the Chinese patent CN 1116094, published on 7 February 1996, whose abstract defines a nutritious and therapeutic composition based on sodium salt or calcium salt of fructose-1,6-diphosphate, L-glutamine, L-aspartic acid, vitamin B₁, vitamin B₆, calcium pantothenate and folic acid, to be administered in hard or soft capsules, with the declared aim of helping to maintain health, to treat and prevent illnesses, and to favor resistance to fatigue and to combat ageing.

Similarly, the French patent FR-M-6065 discloses a medicinal composition based on the alkaline or alkaline earth metal salts of fructose-1,6-diphosphate.

As may be seen from above, the three orally administered products of the prior art use a salt (sodium or calcium salt) of FdP, combined with amino acids and vitamins, in order to formulate a product that should generically combat fatigue. These indications place the respective products in a completely different sector from the one concerning the present invention which, as is evident from the above, concerns diet foods (and, more specifically, beverages) for sportspeople, and that has a specific ergogenic function besides the prevention of muscle fatigue.

According to some preferred embodiments of the invention, the multivitamin-mineral energy supplement proposed contains, per 100 g of dry product, between 0.5 and 50 g of fructose-1,6-diphosphate monomagnesium salt, between 0.5 and 50 g of fructose-1,6-diphosphate bicalcium salt and between 0.5 and 50 g of ribose.

Another preferred aspect of the composition of the invention consists of the presence, in the mixture, of an organic salt of chromium, namely chromium picolinate, which may be included in quantities ranging between 0.25 and 1.0 mg per 100 g of dry product. This ingredient, even in small amounts, favors the absorption of carbohydrates and enhances the action of insulin, thus also favoring "glycemic stillness".

Other carbohydrates whose presence in the product of the invention, in addition to the fundamental ingredients, is certainly advantageous are maltose and the maltodextrins. Both maltose, which is a disaccharide composed of two glucose molecules bound together by a α-glycoside bond, and maltodextrins, which are polysaccharides essentially composed of α-D-glucose, contribute an amount of sugars of varying complexity that are slowly assimilated. This makes the glucose making up these products available over time, thus guaranteeing the availability of an energy source for the whole duration of the sport activity.

Some preferred embodiments of the composition of the energy supplement of the present invention also include mineral salts of sodium and of potassium, such as sodium chloride, sodium bicarbonate and potassium dihydrogen phosphate (KH₂PO₄). As noted earlier with reference to the prior art products, these agents refuel the organism with the electrolytes lost during physical exercise and guarantee the isotonicity of the solution resulting from the preparation according to the present invention.

On the basis of the specifications envisaged for dietary supplements, also the preparation according to the present invention preferably includes a vitamin component, and namely vitamin C, vitamin B₁ and vitamin B₆. Moreover, in order to provide a suitable supplement of iron, which is another element lost during intense sporting activity, the energy supplement of the present invention also contains iron sulfate, FeSO₄·7H₂O.

In accordance with the foregoing preferential indications, a specific formulation of the multivitamin-mineral energy supplement according to the present invention includes the following components in the following weight percentages, referred to the dry product:

| | |
|---|---|
| Fructose-1- 6-diphosphate monomagnesium salt | 6.6 - 8.2 % |
| Fructose-1-6-diphosphate bicalcium salt | 3.3-4.1% |
| Ribose | 8.8-10.9% |
| Maltodextrin | 50-65% |
| Maltose | 0.88-1.1 % |
| Sodium bicarbonate | 2.0 - 2.6 % |
| Potassium dihydrogen phosphate (KH₂PO₄) | 1.1-1.4% |
| Sodium chloride | 1.1-1.4% |
| Thiamine (vit. B₁) | 0.002 -0.003 % |
| Pyridoxine (vit. B₆) | 0.002 - 0.003 % |
| Vitamin C | 0.1-0.2% |
| Chromium picolinate | 0.0004 - 0.0006 % |
| FeSO₄·7H₂O | 0.1-0.3% |

In order to acidify the preparation to the extent necessary to make the bicalcium salt of fructose-1,6-diphosphate soluble, by later adding water, the formulation also contains the following components in the following weight percentages:

| | |
|---|---|
| Citric acid | 7.5-9.3% |
| Tartaric acid | 1.8 - 2.3 % |

It should be note that the use of bicalcium salt of FdP instead of monocalcium salt is advantageous because it provides a greater amount of calcium ions per molecule of organic compound. The same is not possible with the magnesium salt of FdP, that is a monomagnesium salt because the corresponding bimagnesium salt would be totally insoluble in water.

In order to integrate the optimal contribution of calcium ions while maintaining the aforesaid precise ratio between calcium and phosphate (1:1), the preparation preferably also includes an added amount of calcium in the form of calcium carbonate. In the foregoing preferred formulation, the weighted percentage of calcium carbonate is 2.3 - 2.8 %.

In accordance with the general principles of the pharmaceutical art, the composition according to the present invention also includes one or more sweetening agents, one or more flavoring agents and, when necessary, one or more lubricating or non-stick agents in order to facilitate production.

For the use in humans, the aforesaid agents, appropriately mixed, can be supplied in dry powder sachets to be dissolved in water at the time of use, in order to prepare a multivitamin-mineral energy drink to be ingested before physical exercise. More specifically, considering the content of a 20 g energy supplement sachet, for short periods of physical exercise (30 min. approx.), the suggested procedure is to dissolve one sachet of the product in about 250 cc of water to be sipped 30 min. before the physical exercise; for activities longer than 30 min. the suggested procedure is to dissolve two sachets of the product in about 500 cc of water, to be sipped in the 45-60 minutes preceding the start of physical exercise. In any case, it is advisable not to exceed the dose of two sachets (40 g) per day, and to repeat this maximum dosage only on alternate days. The dose of 20 g/day can instead be repeated every day.

It must be noted that the product of the present invention may also be used as an antiasthenic, obviously in smaller doses (half a 20 g sachet in a glass of water), even though this is an indication of secondary importance with respect to its primary use as an energy drink for sports activities.

As pointed out before, the energizing and rehydrating composition according to the invention may also be employed to improve the performance and endurance of animals undergoing a physical exercise, such as, e.g., races or agricultural work. In such cases the composition according to the invention may be added to the animal feed, and the appropriate dosage and formulation may depend on what type of animal is being treated. Specifically, the composition may be flavored in the most appropriate way in order to be attractive to the specific type of animal being treated. A suitable dosage for racing horses, e.g. may be 0.5-1.0 g/kg of body weight, to be administered, mixed with foeed, about 1 hour before the race.

According to another aspect thereof, the present invention also envisages a multivitamin-mineral energy drink containing, dissolved in water, a supplement as defined above, and, in particular, for use in humans, a drink obtained by dissolving in water a composition as the one shown in the above tables, in a ratio of 20 g of dry powder per 250 ml of water.

A specific embodiment of the present invention is described below for illustration purposes only, together with the results of the experimentation carried out on it, regarding the performance of the proposed product and a comparison with some prior art products.

### EXAMPLE 1

### Evaluation of the effect of the supplement on the recovery after (subacute) exercise in amateur athletes

The following experiment assessed the effectiveness of a multivitamin-mineral energy supplement according to the present invention, with the following formulation:

| | |
|---|---|
| Fructose-1-6-diphosphate monomagnesium salt | 1.50 g |
| Fructose-1-6-diphosphate bicalcium salt | 0.75 g |
| Ribose | 2.00 g |
| Maltodextrin | 11.70 g |
| Maltose | 0.20 g |
| Citric acid | 1.70 g |
| Tartaric acid | 0.42 g |
| Calcium carbonate | 0.52 g |
| Sodium bicarbonate | 0.47 g |
| Potassium dihydrogen phosphate (KH₂PO₄) | 0.25 g |
| Sodium chloride | 0.25 g |
| Thiamine (vit. B₁) | 0.49 mg |
| Pyridoxine (vit. B₆) | 0.49 mg |
| Vitamin C | 30.0 mg |
| Chromium picolinate | 1.00 mg |
| FeSO₄·7H₂O | 45.0 mg |
| Sweetener | 0.074 g |
| Flavoring | 0.085 g |
| Lubricant | 0.258 g |
| Total weight | 20.253 g |

In an initial series of tests, the ingestion of the energy supplement was evaluated, in the same subjects and in the same conditions, in comparison with the same activities performed without the aid of the energy supplement; while a second series of tests, always with the same subjects and in the same conditions, compared the effects of the energy supplement of the present invention with an energy supplement of the prior art.

### ■ Comparison between control (no product) and supplement

The study involved nine normal subjects, eight men and one woman, mean age 40.6±8.5 years (range 27-54 years), who practiced a moderate amount of sporting activity, consisting of about 2-5 hours of training per week, divided into 3-5 sessions of about 45-60 min. each. For each subject, the test envisaged two consecutive sessions, each of which was preceded by an impedance meter test (a non-invasive analysis to measure body composition in terms of fats, water and lean mass), and a basic blood test.

Blood samples were used to assess the blood concentrations of: pyruvate (U/ml), lactate (mmol/l), ammonia (mmol/l), glucose (mg/dl), calcium (mg/dl), phosphorus (mg/dl), sodium (mmol/l), potassium (mmol/l), creatinine (mg/dl), Ast (aspartate aminotransferase) (U/I), Alt (alanine aminotransferase) (U/I), magnesium (mg/dl), CPK (creatinine phosphokinase) (U/l), LDH (lactic dehydrogenase) (UII), NEFAs (non-esterified fatty acids) (mg/ dl), insuline (µU/ml), total proteins (g/dl), electrophoretic protein analysis. The complete blood count with white blood cells differential count and platelet count was also assessed.

The test consisted of a triangular effort trial on a cycloergometer, which was performed in the first session without any preventive administration of any product. The ergometric test was arranged in steps of 3' each, starting from a step of 25 watts and thereafter with progressive increases of 25 watts until exhaustion. The following parameters were recorded during the steps and during the first 8 minutes of recovery (every 2 minutes): pulse rate, systolic and diastolic pressure, and the double product was calculated.

The blood samples after physical exercise were taken during the 8^{th} minute of recovery time, and the same dosing of the baseline analysis was repeated. The control impedance meter test was always carried out 30' after the end of the physical exercise.

After seven days, the same subjects repeated the same procedure (in the second session) but were given 40 g of the energy supplement according to the present invention, dissolved in 500 ml of water, before the ergometric test. The product was ingested 40 min. before the start of physical exercise. The basic checks and the procedure of the ergometric test were the same.

The comparative results for a first set of evaluated parameters are reported in the following table.

| | control | supplement |
|---|---|---|
| Exhaustion time (min.), p <0.001 | 21±2.5 | 25±2.6 |
| External work (watts), p <0.001 | 175±21.6 | 208±1.6 |
| Double product, p <0.05 | 25422±5505 | 32791±3790 |

As may be seen from the aforesaid data, the administration of the energy supplement according to the present invention gives better tolerance to physical effort, as shown by the lengthening of exhaustion time and the greater production of external work. Moreover, use of the energy supplement leads to a significant increase in calcium and phosphorous concentrations in the blood and to a significant reduction of sodium, pyruvate and NEFAs, as shown in the following table.

| | base | control | supplement |
|---|---|---|---|
| calcium (mg/dl), p <0.05 | 9.2±0.2 | 9.1±0.2 | 9.3±0.2 |
| phosphorus (mg/dl), p <0.001 | 3.7±0.4 | 3.5±0.32 | 4.3±0.5 |
| pyruvate (U/ml) | 22.0±4.64 | 27.3±3.77 | 24.3±2.83 |
| sodium (mmol/l) | 140.9±2.32 | 141.1±2.20 | 138.4±1.74 |
| NEFAs (mg/dl) | 16.2±2.54 | 23.3±5.45 | 18.1±1.96 |

Another considerable result is the fact that when the energy supplement according to the present invention is administered, weight does not decrease at the end of the physical effort, as the following data show:

| | base | control | supplement |
|---|---|---|---|
| Weight (kg), p<0.05 | 71.1±8.3 | 70.3±8.6 | 71.1±8.3 |

Among the other parameters examined, the variations of blood ammonia, creatinine, glucose and of LDH are interesting, and are summarized in the following table.

| | base | control | supplement |
|---|---|---|---|
| ammonia (mmol/l) | 26.3±2.7 | 47.6±4.8 | 40.2±4.0 |
| creatinine (mg/dl) | 0.87±0.09 | 0.91±0.09 | 0.88±0.09 |
| glucose (mg/dl) | 88.4±8.50 | 97.1±15.5 | 82.6±13.4 |
| LDH (U/I) | 379.4±43.1 | 415.8±74.5 | 505.1±72.4 |

The significant increase in the values of ammonia that is found in the absence of the product indicates the tendency of the product to improve the threshold levels of ammonia, a substance produced mainly by the IIB fibres. The creatinine values show a significant increase with respect to baseline values only in the physical effort performed in the absence of the energy supplement, while the increase in LDH that is seen in the second trial is probably due to the greater intensity with which the latter trial was performed. The product does not give rise to any insulin rebound: in fact, there is an equal increase in blood insuline values also in the presence of a significant reduction of glycemia (that stays within the norm). Consensual variations in the number of blood cells, of hematocrit and of hemoglobin are the result of a slight effort-based blood concentration. The effect on muscle trophism, shown by the trend of the blood creatinine values, is completed by the conservation of body weight when the product of the present invention is administered. These observations are all the more remarkable in view of the greater duration and intensity of the work done in the test in which the energy supplement was administered.

On the whole, the experimentation carried out demonstrates that administration of the proposed energy supplement gave rise to better tolerance of efforts of average duration (20-24 min.) in nine subjects undergoing progressive loads until exhaustion. This is borne out by the lengthening of the time before exhaustion and the achievement of a greater workload in watts. The product determines a better calcium and phosphorous profile and seems to maintain body trophism by avoiding the body weight loss that is observed after physical effort.

Subsequently, the same nine subjects of the study were given 40 g of the energy supplement of the present invention, dissolved in 500 ml of water, 40 min, before an 8 km jogging session lasting 40 min. on average. The subjects' lactic acid in capillary blood was measured before and after the jogging session, by using a Lactate Pro Test Meter with the relative test strips. The results are reported for each of the nine subjects in the following table.

| | Variations in lactic acid in capillary blood (mmol/l) | | | | | | | | | |
|---|---|---|---|---|---|---|---|---|---|---|
| Subject no. | 1 | 2 | 3 | 4 | 5 | 6 | 7 | 8 | 9 | Mean |
| Baseline | 1.6 | 2.6 | 2.2 | 2.9 | 2.3 | 2.4 | 1.9 | 2.6 | 2 | 2.28 |
| Supplement | 1.2 | 1.4 | 2.2 | 1 | 1.4 | 1.3 | 1.5 | 1.2 | 1.6 | 1.42 |

As may be seen, the data trend is that of a buffer effect performed by the product, with a reduction of acidity in the muscle during training.

### Comparison between Hydro Power (Ultimate) and the claimed supplement

The energy supplement of the prior art in respect of which the comparative tests were performed was selected from among the products known as saline diet supplements with a comparable composition to the one of the present invention. More specifically, the selected product, marketed under the name of Hydro Power by Ultimate Italia, contains both ribose and phosphates, as well as mineral salts and vitamins, but the phosphates present in the formulation are exclusively in the form of inorganic salts.

Nine normal subjects, eight men and one woman, mean age 40.1±8.4 years (range 39-54 years), who practiced a moderate amount of sporting activity, consisting of about 2 hours of training per week, divided into 3 sessions of about 40 min. each. For each subject, the test envisaged two consecutive sessions each of which was preceded by a basic blood test.

Blood samples were used to assess the blood concentrations of: pyruvate (U/ml), lactate (mmol/l), ammonia (mmol/l), glucose (mg/dl), calcium (mg/dl), phosphorus (mg/dl), sodium (mmol/l), potassium (mmol/l), creatinine (mg/dl), Ast (aspartate aminotransferase) (U/l), Alt (alanine aminotransferase) (U/l), magnesium (mg/dl), CPK (creatinine phosphokinase) (U/l), LDH (lactic dehydrogenase) (U/l), NEFAs (non-esterified fatty acids) (mg/ dl), insuline (µU/ml), total proteins (g/dl), electrophoretic protein analysis. The complete blood count with white blood cells differential count and platelet count was also assessed.

Two ergometric sessions were arranged on different days for all nine subjects, administering a sachet of Hydro Power or a sachet of the energy supplement of the present invention, diluted in 500 ml of water, before the ergometric test. These preparations were ingested 40 min. before starting the physical exercise and the blood samples were taken after the exercise itself, during the 8^{th} minute of the recovery period.

The test consisted of a triangular effort trial on a cycloergometer, arranged in steps of 3' each, starting from a step of 25 watts and thereafter with progressive increases of 25 watts until exhaustion. The following parameters were recorded during the steps and during the first 8 minutes of recovery (every 2 minutes): pulse rate, systolic and diastolic pressure, and the double product was calculated.

The comparative results for an initial set of evaluated parameters are reported in the following table.

| | Hydro Power | supplement |
|---|---|---|
| Exhaustion time (min.), p <0.05 | 23±3.3 | 24±2.8 |
| External work (watts), p <0.05 | 192±28 | 203±23 |
| Double product, p <0.05 | 28145±3203 | 33171±3350 |

The above data shows that, even in comparison with other energy supplements of the same purposes, the administration of the energy supplement of the present invention determines a better tolerance of physical effort, with a lengthening of the time before exhaustion of over one minute and a consequent increase of external work done.

With the use of the energy supplement of the present invention there is also an increase of blood concentrations of calcium approaching statistical significance, while the blood phosphorus content increases significantly after both tests. The results also show a significant reduction of sodium and pyruvate when the energy supplement of the present invention is administered, compared to the other product. The values found are reported in the following table.

| | baseline | Hydro Power | supplement |
|---|---|---|---|
| Calcium (mg/dl), | 8.98±0.94 | 9.12±0.24 | 9.3±0.19 |
| Phosphorus (mg/dl), p <0.001 | 3.2±0.36 | 4.12±0.44 | 4.29±0.49 |
| Pyruvate (U/ml) | 21.22±5.19 | 26.44±3.36 | 24.78±2.91 |
| Sodium (mmol/l) | 140.33±2.35 | 142.44±2.60 | 138.79±2.11 |

The values of blood potassium decrease in both tests, but less (approaching significance) when the energy supplement of the present invention is administered. A significant increase of ammonia is found only when Hydro Power is administered (see the following table), thus confirming that the proposed energy supplement of the present invention improves the threshold of this substance, which is produced mainly by the IIB fibers.

| | baseline | Hydro Power | supplement |
|---|---|---|---|
| Ammonia (mmol/l) | 25.33±6.4 | 44.11±16.36 | 39.33±17.25 |
| Creatinine (mg/dl) | 0.88±0.08 | 0.98±0.13 | 0.89±0.12 |
| CPK (U/I) | 98.78±74.12 | 133.22±59.47 | 160.11±124.89 |
| glucose (mg/dl) | 86.78±6.82 | 73.00±11.64 | 78.89±12.22 |
| LDH (U/I) | 387.55±53.81 | 489.11±88.29 | 519.00±68.05 |
| Gpt-Alt (U/I) p<0.005 | 33.89±11.22 | 42.00±7.98 | 35.00±10.42 |

Creatinine has a similar trend, showing a significant increase only in the physical effort performed without the energy supplement of the present invention. In both tests there is an increase in LDH and CPK concentrations, a significant increase in the presence of the energy supplement of the present invention, probably due to the greater intensity of the work done. The significant difference of Alt (alanine aminotransferase), whose concentrations are found to be lower when using the product of the present invention, is also noteworthy.

The energy supplements do not cause variations in blood insuline content but only non-significant increases in lactate. It must be noted that when the energy supplement of the present invention is administered, glycaemia does not significantly decrease with the greater external work done. Consensual variations in the number of blood cells, of hematocrit and of hemoglobin are the result of slight effort-based blood concentration.

On the whole, the experimentation carried out demonstrates that administration of the proposed energy supplement gave rise to better tolerance of efforts of average duration (20-24 min.) in subjects undergoing progressive workloads until exhaustion, if compared to an existing commercially available product. This is borne out by the lengthening of the time before exhaustion and the achievement of a greater workload in watts and greater double product. The product determines a better blood glucose, creatinine and Alt profile. Although not reaching statistical significance, the profiles of calcium, potassium and phosphorous are maintained. Even the improved profile of the concentrations of ammonia confirms the advantageous effect of the product on tolerance of efforts.

### EXAMPLE 2

### Evaluation of the effect of the supplement on the tolerance of efforts

### in non-professional national level cyclists

In another series of tests the performance of the multivitamin-mineral energy supplement according to the present invention, in particular having the same composition as specified in Example 1, was compared with the performance of another commercial sports supplement, Polase Sport (Whitehall), which is also available in dry powder sachets to be dissolved in water before use.

Also in this case the comparison product belongs to the third category of sports drinks referred to above, i.e. it contains mainly sugars, electrolytes corresponding to the body salts that are normally lost in physical exercise and vitamins. Specifically, Polase Sport contains fructose and maltodextrin as sugars, potassium L-aspartate and magnesium L-aspartate as a source of potassium and magnesium ions, vitamin C and vitamin E, and monobasic sodium phosphate as a source of phosphate. Thus, also in this case, the phosphates present in the formulation are exclusively in the form of inorganic salts.

Ten male cyclists, mean age 31±10 years (range 18-49 years), who practiced cyclism in competitions at a national level in the non-professional category, were enrolled in a test consisting of two consecutive sessions of maximal effort trials on cycloergometer, each of which was preceded by a basic blood test.

The blood parameters assessed with the base blood test were as follows: glucose (g/l), creatinine (mg/dl), total cholesterol (mg/dl), triglycerids (mg/dl), nitrogen (g/l), Ast (aspartate aminotransferase) (U/l), Alt (alanine aminotransferase) (U/l), CPK (creatinine phosphokinase) (U/l), LDH (lactic dehydrogenase) (U/l), calcium (mg/dl), phosphorus (mg/dl), sodium (mEq/l), potassium (mEq/l), pyruvate (mU/ml), ketones (mU/ml), NEFAs (non-esterified fatty acids) (mg/dl), lactate (mmol/l), ammonia (µg/dl), HGH (ng/dl), insuline (µU/ml), cortisol (ng/ml), glucagons (pg/ml), plasmatic catecholamines (pg/ml), as well as the electrophoretic protein analysis. The complete blood count with white blood cells differential count and platelet count was also assessed.

Two maximal effort sessions on cycloergometer were arranged on different days for all ten subjects, administering in double blind two sachets of Polase Sport or two sachets of the energy supplement of the present invention, diluted in 500 ml of water, before the ergometric test. These preparations were ingested before starting the physical exercise, and further blood samples were taken after the exercise itself, during the 7^{th} minute of the recovery period. The second session, which took place after seven days from the previous one, was identical to the first one, but each cyclist received, in double blind, the other product.

The test consisted of a maximal effort trial, carried out after 2' of warming up at 25 watts. The test was arranged in steps of 2' each, starting from a step of 75 watts and thereafter with progressive increases of 25 watts until the Respiratory Quotient (RQ) of 1.1 was reached. When RQ 1.1 was reached, all the athletes were asked to carry out a further 25 W step for 2' or, in the event that exhaustion occurred before, until possible.

The following parameters were recorded during the test and during the first 10 minutes of recovery: pulse rate, systolic and diastolic pressure with the calculation of the double product, the amount of O₂ consumed (VO₂) and the amount of CO₂ (VCO₂) emitted, respectively in ml/kg/m ed in I/m, the ventilation (VE) in I/m. In addition, the end-tidal fractions of O₂ and CO₂ (FETO₂-FETCO₂) were measured, as well as the respiratory quotient (RQ) and the respiratory equivalents for O₂ (VE/VO₂) and CO₂ (VE/CO₂).

The test results showed that for both products in comparison there were, in respect of the baseline values, statistically significant (p<0.05 as measured with the Student t test) variations in red blood cells, white blood cells and platelet counts, as well as in the total blood proteins. Also significant for both products were, in respect of the baseline values, the increases in the following blood parameters: lactate, ketones, cholesterol, Ast, phosphorus, insulin, glucagons and total catecholamines. For both products a significant reduction of NEFAs and of the ureic nitrogen were observed.

However, only when Polase Sport was administered there was a significant increase, in respect of the baseline values, in blood glucose, creatinine, LDH and calcium.

The increase in blood creatinine which may be observed for the comparison product, in agreement with the significant difference measured in the percent increases in creatinine (i.e. creatinine Δ%) confirms the previous findings as concerns a protective effect of the supplement according to the invention on the muscle catabolism.

The above protective effect is further confirmed by the different behavior of LDH between tests carried out with the comparison product and those carried out with the product according to the invention: it has been shown that the blood concentrations of LDH significantly increase only when the comparison product is employed. The results of such tests are summarized in the following table (where baseline A are the baseline values of the athletes who received Polase Sport, and baseline B are the baseline values of the athletes who received Polase Sport).

| | baseline A | baseline B | Polase Sport | supplement |
|---|---|---|---|---|
| LDH (U/l) | 417.8±62.18 | 437.5±93.76 | 449.3±64.94 | 456.7±98.94 |
| ΔLDH (U/l) | | | 31.5±42.74 | 19.2±42.85 |

The most relevant effect of the administration of the supplement according to the invention in comparison with the prior art product considered is the overall improvement of the cardiovascular performance at RQ 1.1. The use of the proposed supplement involves a higher working capacity, with a more efficient ratio between work produced and amount of lactate produced. The following table shows, for both Polase Sport and for the supplement according to the invention, the joules of work produced per unit of variation of lactate (Δlactate) and, in order to better compare the variations observed in the athletes, the ratio of the above amounts to the athletes' body weight (joules produced per mole of lactate produced per kg of body weight)

| | Polase Sport | supplement |
|---|---|---|
| Work/Δlactate (J/mmol/l) | 80469.77±34059.674 | 109486.1±79381.85 |
| Work/body weight/Δlactate (J/kg·mmol/l) | 1130.09±478.32 | 1524.80±1062.56 |

In the absence of other differences in the cardiovascular and respirometric parameters at RQ 1.1, particularly remarkable is the difference in the ratio VO₂/heart rate (VO₂/Hr), which is normally referred to as "O₂ pulse". This parameter depends on an adequate cardiovascular response in terms of the stroke volume with the exercise, reflecting an adequate measure of the latter. The average values of the O₂ pulse at the last but one step for athletes receiving Polase Sport and for those receiving the supplement of the invention are compared in the following table.

| | Polase Sport | supplement |
|---|---|---|
| O₂ pulse at RQ 1.15 (ml O₂/Hr) | 14.55±2.13 | 18.06±4.14 |

### EXAMPLE 3

### Evaluation of the effect of the supplement on the tolerance of efforts

### in animals

In a still further series of trials, the supplement according to the invention, formulated as shown in Example 1, was administered to racing horses, mixed with feed, about 1 hour before the performance. The dosages tested were 0.5 g/kg of body weight and 1.0 g/kg of body weight. At both dosages the product confirmed the same advantageous effect on stress tolerability as observed in man.

The present invention has been disclosed with particular reference to some specific embodiments thereof, but it should be understood that modifications and changes may be made by the persons skilled in the art without departing from the scope of the invention as defined in the appended claims.

## Claims

1. A multivitamin-mineral energy supplement comprising, as fundamental ingredients, one or more magnesium salts of a phosphorylated carbohydrate, one or more calcium salts of a phosphorylated carbohydrate and ribose.

2. An energy supplement according to claim 1, wherein said magnesium salts of a phosphorylated carbohydrate are fructose-1,6-diphosphate magnesium salts.

3. An energy supplement according to claims 1 or 2, wherein said calcium salts of a phosphorylated carbohydrate are fructose-1,6-diphosphate calcium salts.

4. An energy supplement according to claim 1, wherein said phosphorylated carbohydrates are respectively fructose-1,6-diphosphate monomagnesium salt and fructose-1,6-diphosphate bicalcium salt.

5. An energy supplement according to claim 1, containing, per 100 g of dry product, between 0.5 and 50 g of fructose-1,6-diphosphate monomagnesium salt, between 0.5 and 50 g of fructose-1,6-diphosphate bicalcium salt and between 0.5 and 50 g of ribose.

6. An energy supplement according to claims 1 or 4, also comprising an organic salt of chromium.

7. An energy supplement according to claim 6, containing, per 100 g of dry product, between 0.25 and 1.0 mg of chromium picolinate.

8. An energy supplement according to claims 1 or 4, also including maltodextrin and maltose.

9. An energy supplement according to claim 8, also including mineral salts of sodium and potassium.

10. An energy supplement according to claim 8, also including vitamin C, vitamin B₁ and vitamin B₆.

11. An energy supplement according to claim 8, also including iron sulfate (FeSO₄**·**7H₂O).

12. A multivitamin-mineral energy supplement comprising the following components in the following weight percentages, referred to the dry product:
| | |
|---|---|
| Fructose-1- 6-diphosphate monomagnesium salt | 6.6 - 8.2% |
| Fructose-1- 6-diphosphate bicalcium salt | 3.3 - 4.1 % |
| Ribose | 8.8 - 10.9% |
| Maltodextrin | 50 - 65% |
| Maltose | 0.88 - 1.1 % |
| Sodium bicarbonate | 2.0 - 2.6 % |
| Potassium dihydrogen phosphate (KH₂PO₄) | 1.1 - 1.4% |
| Sodium chloride | 1.1 -1.4 % |
| Thiamine (vit. B₁) | 0.002 - 0.003 % |
| Pyridoxine (vit. B₆) | 0.002 - 0.003 % |
| Vitamin C | 0.1 - 0.2% |
| Chromium picolinate | 0.0004 - 0.0006 % |
| FeSO₄·7H₂O | 0.1 - 0.3% |

13. An energy supplement according to claim 12, also including the following components in the following weight percentages:
| | |
|---|---|
| Citric acid | 7.5 - 9.3% |
| Tartaric acid | 1.8 - 2.3% |

14. An energy supplement according to claim12 or 13, also comprising the following component, in weight percentage:
| | |
|---|---|
| Calcium carbonate | 2.3 - 2.8 % |

15. An energy supplement according to claim12 or 13, also comprising one or more sweeteners, one or more flavorings and one or more lubricants.

16. A multivitamin-mineral energy beverage containing a supplement, dissolved in water, as defined in claims 1, 4 or 12.

17. A beverage according to claim 16, containing a supplement dissolved in water in a ratio of 20 g of dry powder per 250 ml of water.

## Patentansprüche

1. Multivitamin-Mineral-Energieergänzung, umfassend als Grundbestandteile ein oder mehrere Magnesiumsalz(e) eines phosphorylierten Kohlenhydrats, ein oder mehrere Calciumsalz(e) eines phosphorylierten Kohlenhydrats und Ribose.

2. Energieergänzung nach Anspruch 1, wobei die Magnesiumsalze eines phosphorylierten Kohlenhydrats Fructose-1,6-diphosphat-Magnesiumsalze sind.

3. Energieergänzung nach den Ansprüchen 1 oder 2, wobei die Calciumsalze eines phosphorylierten Kohlenhydrats Fructose-1,6-diphosphat-Calciumsalze sind.

4. Energieergänzung nach Anspruch 1, wobei die phosphorylierten Kohlenhydrate Fructose-1,6-diphosphat-Monomagnesiumsalz bzw. Fructose-1,6-diphosphat-Dicalciumsalz sind.

5. Energieergänzung nach Anspruch 1, enthaltend pro 100 g trockenen Produkts zwischen 0,5 und 50 g Fructose-1,6-diphosphat-Monomagnesiumsalz, zwischen 0,5 und 50 g Fructose-1,6-diphosphat-Dicalciumsalz und zwischen 0,5 und 50 g Ribose.

6. Energieergänzung nach den Ansprüchen 1 oder 4, ferner umfassend ein organisches Salz von Chrom.

7. Energieergänzung nach Anspruch 6, enthaltend pro 100 g trockenen Produkts zwischen 0,25 und 1,0 mg Chrompicolinat.

8. Energieergänzung nach den Ansprüchen 1 oder 4, ferner umfassend Maltodextrin und Maltose.

9. Energieergänzung nach Anspruch 8, ferner umfassend Mineralsalze von Natrium und Kalium.

10. Energieergänzung nach Anspruch 8, ferner umfassend Vitamin C, Vitamin B₁ und Vitamin B₆.

11. Energieergänzung nach Anspruch 8, ferner umfassend Eisensulfat (FeSO₄·7H₂O).

12. Multivitamin-Mineral-Energieergänzung, umfassend die folgenden Komponenten in den folgenden Gewichtsprozenten, bezogen auf das trockene Produkt:
| | |
|---|---|
| Fructose-1-6-diphosphat-Monomagnesiumsalz | 6,6-8,2 % |
| Fructose-1-6-diphosphat-Dicalciumsalz | 3,3-4,1 % |
| Ribose | 8,8-10,9 % |
| Maltodextrin | 50-65 % |
| Maltose | 0,88-1,1 % |
| Natriumhydrogencarbonat | 2,0-2,6 % |
| Kaliumdihydrogenphosphat (KH₂PO₄) | 1,1-1,4 % |
| Natriumchlorid | 1,1-1,4 % |
| Thiamin (Vitamin B₁) | 0.002-0,003 % |
| Pyridoxin (Vitamin B₆) | 0,002-0,003 % |
| Vitamin C | 0,1-0,2 % |
| Chrompicolinat | 0,0004-0,0006 % |
| FeSO₄·7H₂O | 0,1-0,3 % |

13. Energieergänzung nach Anspruch 12, ferner umfassend die folgenden Komponenten in den folgenden Gewichtsprozenten:
| | |
|---|---|
| Citronensäure | 7,5-9,3 % |
| Weinsäure | 1,8-2,3 %. |

14. Energieergänzung nach Anspruch 12 oder 13, ferner umfassend die folgende Komponente in Gewichtsprozent:
| | |
|---|---|
| Calciumcarbonat | 2.3-2.8 % |

15. Energieergänzung nach Anspruch 12 oder 13, ferner umfassend einen oder mehrere Süßstoff(e), einen oder mehrere Geschmacksstoff(e) und ein oder mehrere Gleitmittel.

16. Multivitamin-Mineral-Energiegetränk, enthaltend eine in Wasser aufgelöste Ergänzung wie in den Ansprüchen 1, 4 oder 12 definiert.

17. Getränk nach Anspruch 16, enthaltend eine in Wasser in einem Verhältnis von 20 g Trockenpulver auf 250 ml Wasser aufgelöste Ergänzung.

## Revendications

1. Complément énergétique minéral multivitaminé comprenant, comme ingrédients fondamentaux, un ou plusieurs sels de magnésium d'un hydrate de carbone phosphorylé, un ou plusieurs sels de calcium d'un hydrate de carbone phosphorylé et du ribose.

2. Complément énergétique selon la revendication 1, dans lequel lesdits sels de magnésium d'un hydrate de carbone phosphorylé sont des sels de magnésium de fructose-1,6-diphosphate.

3. Complément énergétique selon la revendication 1 ou 2, dans lequel lesdits sels de calcium d'un hydrate de carbone phosphorylé sont des sels de calcium de fructose-1,6-diphosphate.

4. Complément énergétique selon la revendication 1, dans lequel lesdits hydrates de carbone phosphorylés sont, respectivement, le sel de monomagnésium de fructose-1,6-diphosphate et le sel bicalcique de fructose-1,6-diphosphate.

5. Complément énergétique selon la revendication 1, contenant, pour 100 g de produit sec, 0,5 à 50 g de sel de monomagnésium de fructose-1,6-diphosphate, 0,5 à 50 g de sel bicalcique de fructose-1,6-diphosphate et 0,5 à 50 g de ribose.

6. Complément énergétique selon la revendication 1 ou 4, comprenant également un sel organique de chrome.

7. Complément énergétique selon la revendication 6, contenant, pour 100 g de produit sec, 0,25 à 1,0 mg de picolinate de chrome.

8. Complément énergétique selon la revendication 1 ou 4, comprenant également de la maltodextrine et du maltose.

9. Complément énergétique selon la revendication 8, comprenant également des sels minéraux de sodium et de potassium.

10. Complément énergétique selon la revendication 8, comprenant également de la vitamine C, de la vitamine B₁ et de la vitamine B₆.

11. Complément énergétique selon la revendication 8, comprenant également du sulfate de fer (FeSO₄.7H₂O).

12. Complément énergétique minéral multivitaminé comprenant les composants suivants en les pourcentages pondéraux suivants, sur la base du produit sec :
| | |
|---|---|
| Sel de monomagnésium de fructose-1,6-diphosphate | 6,6-8,2% |
| Sel bicalcique de fructose-1,6-diphosphate | 3,3-4,1 % |
| Ribose | 8,8-10,9% |
| Maltodextrine | 50-65% |
| Maltose | 0,88 - 1,1 % |
| Bicarbonate de sodium | 2,0-2,6% |
| Dihydrogénophosphate de potassium (KH₂PO₄) | 1,1 - 1,4 % |
| Chlorure de sodium | 1,1 - 1,4 % |
| Thiamine (vitamine B₁) | 0,002 - 0,003 % |
| Pyridoxine (vitamine B₆) | 0,002 - 0,003 % |
| Vitamine C | 0,1-0,2% |
| Picolinate de chrome | 0,0004 - 0,0006 % |
| FeSO₄.7H₂O | 0,1-0,3% |

13. Complément énergétique selon la revendication 12, comprenant également les composants suivants, en les pourcentages pondéraux suivants :
| | |
|---|---|
| Acide citrique | 7,5-9,3% |
| Acide tartrique | 1,8 - 2,3 % |

14. Complément énergétique selon la revendication 12 ou 13, comprenant également le composant suivant, en pourcentage pondéral :
| | |
|---|---|
| Carbonate de calcium | 2.3 - 2.8 %. |

15. Complément énergétique selon la revendication 12 ou 13, comprenant également un ou plusieurs édulcorants, un ou plusieurs agents aromatisants et un ou plusieurs lubrifiants.

16. Boisson énergétique minérale multivitaminée contenant un complément, dissous dans de l'eau, tel que défini dans la revendication 1, 4 ou 12.

17. Boisson selon la revendication 16, contenant un complément dissous dans l'eau en un rapport de 20 g de poudre sèche pour 250 ml d'eau.
